# EUROPÄISCHE PATENTSCHRIFT

(11) **EP 1 691 104 B1**
(45) Veröffentlichungstag und Bekanntmachung des Hinweises auf die Patenterteilung: **10.09.2008**
(21) Anmeldenummer: 05026564.4
(22) Anmeldetag: 06.12.2005
(51) Int. Cl.: F16F 1/387

(54) **Elastisches Lager**
Elastic mount
Support élastique

(30) Priorität: 12.02.2005 DE 102005006480
(43) Veröffentlichungstag der Anmeldung: 16.08.2006
(73) Patentinhaber: Jörn GmbH, 71336 Waiblingen (DE)
(72) Erfinder: Zawadzki, Bernd, 71409 Schwaikheim (DE)
(74) Vertreter: Liebl, Thomas

(56) Entgegenhaltungen:
- EP-A- 0 493 731
- DE-A1- 10 258 987

## Beschreibung

Die Erfindung betrifft ein elastisches Lager nach dem Oberbegriff des Anspruchs 1.

Ein bekanntes, gattungsgemäßes elastisches Lager (EP 0 493 731 B1) besteht aus einem inneren Metallteil als erstem Lagerteil mit wenigstens einem Anschlusselement und einem äußeren, mit wenigstens einem weiteren Anschlusselement ausgerüsteten rohrförmigen Aufnahmeauge als zweitem Lagerteil, in dem das erste Lagerteil zumindest teilweise aufgenommen ist. In einem Spaltraum zwischen der Außenfläche des inneren Metallteils und der Innenfläche des Aufnahmeauges ist unter Vorspannung ein Elastomerkörper eingebracht, so dass sich beidseitig quer zur Rohrachse je eine Elastomerkörper-Stirnfläche ergibt. In den Bereich einer solchen Elastomerkörper-Stirnfläche ist ein Stützring aufgesteckt und axial abgestützt. Dadurch ergibt sich bei axialen Lagerbewegungen, bei denen eine Elastomerkörper-Stirnseite gegen den zugeordneten Stützring gepresst wird, eine axiale Wegbegrenzung als Anschlag und/oder ein steiler Anstieg der axialen Federkennung.

Konkret handelt es sich hier um ein elastisches Lager zur Lagerung eines Federauges einer Blattfeder an einem Fahrzeug, bei dem das Aufnahmeauge ein endseitiges Federauge einer Blattfeder ist, in das das innere Metallteil mit einem aufvulkanisierten Elastomerkörper und einem längsgeschlitzten, anvulkanisierten Außenblechrohr unter Vorspannung eingepresst ist. Das innere Metallteil und das Aufnahmeauge sind kreiszylindrisch ausgebildet. An beiden Elastomerkörper-Stirnflächen sind Stützringe vorgesehen. Das innere Metallteil ist zwischen seitlichen Wangen eines Lagerbocks mittels einer zentralen Schraube gehalten und eingespannt. Durch diese Wangen sind auch die Stützringe im fertigmontierten Zustand axial abgestützt und fixiert. Diese axiale Abstützung und Fixierung der Stützringe ist somit nur möglich, wenn ein Lagerbock mit seitlichen Wangen vorliegt, welche an den Stützringen anliegen. Bei einem anderen Lageraufbau, beispielsweise wenn das innere Metallteil einen an sich bekannten Pratzenanschluss aufweist, ist die vorstehende axiale Stützringfixierung nicht möglich.

Weiter ist ein elastisches Lager als Gelenklager bekannt (EP 0 819 556 A2), mit einem inneren, balligen Metallteil, welches in einem äußeren rohrförmigen Aufnahmeauge mit kreiszylindrischem Innendurchmesser aufgenommen ist. Das innere Metallteil steht mit beidseitigen axial ausgerichteten Anschlusspratzen aus dem Aufnahmeauge vor. Zwischen dem inneren Metallteil und dem Aufnahmeauge sind in einem Spaltraum Elastomerkörper eingebracht, die an den Elastomerkörper-Stirnflächen über Stützringe axial vorgespannt sind. Die Stützringe sind hier aufgesteckt und an der Innenseite des Aufnahmeauges durch Federringe axial abgestützt und fixiert, welche in umlaufende Ringnuten des Aufnahmeauges eingreifen. Diese Art der axialen Abstützung und Fixierung der Stützringe mittels Federringen ist ersichtlich unabhängig von seitlichen Lagerbockwangen durchführbar und damit für einen Pratzenanschluss geeignet, jedoch insgesamt aufwendig und kostenintensiv.

Bei den vorstehenden elastischen Lagern ist die Elastomerkörperanordnung jeweils vorgespannt und im Spaltraum zwischen dem Aufnahmeauge und dem inneren Metallteil durchgehend ringförmig ausgeführt, wobei insgesamt ein kreiszylindrischer Lageraufbau vorliegt. Es sind jedoch auch andere Lageraufbauten, insbesondere mit prismatischen inneren Metallteilen und entsprechend geformten Aufnahmeaugen bekannt (DE 23 60 857 A), wobei zwischen gegenüberliegenden Prismaflächen untereinander beabstandete Elastomerkörper unter Vorspannung eingebracht sind. Grundsätzlich können die Elastomerkörper ggf. mit weiteren Außenblechen und/oder Zwischenblechen am inneren Metallteil und/oder im Aufnahmeauge anvulkanisiert sein. Alternativ dazu können die Elastomerkörper je nach den Gegebenheiten auch als separate Teile unter Vorspannung in den Spaltraum zwischen dem inneren Metallteil und dem Aufnahmeauge eingesetzt sein. Grundsätzlich kann das Aufnahmeauge einteilig sein oder in der Art einer Spannschelle mehrteilig ausgeführt sein.

Wesentlich für die vorliegende Erfindung ist es, dass ein Lageraufbau mit einem inneren Metallteil und einem Aufnahmeauge mit dazwischen eingebrachtem Elastomerkörper oder mehreren Elastomerkörpern vorliegt, wobei axial zugängliche und mittels Stützringen abstützbare Elastomerkörper-Stirnflächen vorliegen. Die Erfindung ist dann auf elastische Lager mit unterschiedlichen geometrischen Aufbauten, wie zylindrischem, insbesondere kreiszylindrischem Aufbau oder prismatischem Aufbau sowie Kombinationen davon anwendbar.

Aufgabe der Erfindung ist es, ein gattungsgemäßes elastisches Lager so weiterzubilden, dass eine einfache und kostengünstige axiale Fixierung und Abstützung von Stützringen möglich ist.

Diese Aufgabe wird mit den Merkmalen des Anspruchs 1 gelöst.

Gemäß Anspruch 1 ist im Bereich eines Stützrings in einer Querebene an der Außenfläche des inneren Metallteils oder an der Innenfläche des Aufnahmeauges eine durchgehende oder teilweise unterbrochene Ringnut eingebracht, in die Material des Stützrings für dessen axiale Abstützung verprägt ist.

Damit ist die axiale Abstützung des Stützrings unmittelbar durch den Stützring selbst am inneren Metallteil oder am Aufnahmeauge durchgeführt, so dass zusätzliche Stützbauteile, wie die eingangs erläuterten Wangen eines Lagerbocks oder Federringe nicht erforderlich sind. Die Verprägung von Material des Stützrings in die zugeordnete Ringnut kann zudem in einem Arbeitsgang mit dem ohnehin erforderlichen Aufsteckvorgang erfolgen. Damit ergibt sich insgesamt eine einfache und kostengünstige Lösung für die axiale Abstützung und Fixierung eines Stützrings. Da diese Fixierung unmittelbar mit dem Stützring selbst ohne Benutzung von Lageranschlusselementen wie Lagerbockwangen durchgeführt wird, ergeben sich konstruktive Freiräume beim Lageranschluss.

In einer besonders bevorzugten Ausführungsform nach Anspruch 2 ist die in Aufsteckrichtung des Stützrings zur Lagermitte hin liegende Ringnutbegrenzung als in den axialen Aufsteckweg des Stützrings ragende Anlaufschulter ausgebildet. Am Stützring sind Materialvorsprünge vorgesehen, die im Herstellzustand und beim Aufsteckvorgang in Aufsteckrichtung gegen die Anlaufschulter vorspringen. Diese Materialvorsprünge werden beim Aufsteckvorgang gegen die Anlaufschulter geführt und mittels einer axial gerichteten Aufpressprägekraft in die Ringnut verprägt. Die Materialvorsprünge sind hinsichtlich ihres Materialvolumens so dimensioniert, dass die zugeordnete Ringnut nach dem Verprägen voll mit Stützringmaterial ausgefüllt ist und ggf. ein kleiner Materialüberschuss noch außerhalb der Ringnut verbleibt. Die Ringnutkontur und die Materialvorsprünge des Stützrings können für eine zielgerichtete Verprägung ggf. in ihrer Geometrie aufeinander abgestimmt und angepasst sein. Eine stabile belastbare Stützringfixierung wird insbesondere mit einer Rechtecknut erreicht.

In einer konkreten Ausführung gemäß Anspruch 3 ist der Stützring mit seiner Innenringkontur der Metallteilaußenkontur im Abstützbereich angepasst und auf das innere Metallteil formschlüssig aufgesteckt mit einem umlaufenden ringäußeren Lagerwegspalt zum Aufnahmeauge hin. Die Weite dieses Lagerwegspalts bestimmt die maximale radiale Lagerauslenkung für den Fall, dass auch der Stützring axial innerhalb des Aufnahmeaugenbereichs angeordnet ist und damit als Radialanschlag wirkt. Am inneren Metallteil ist die Ringnut angebracht und die Materialvorsprünge am Stützring sind in dessen Herstellzustand am ringinneren Ringwandbereich in Axialrichtung abstehend angeformt. Der Stützring kann dadurch ohne Behinderung durch die Materialvorsprünge ggf. bis zur Anlaufschulter aufgesteckt werden und erst dann erfolgt der Verprägevorgang. Bei dieser Ausführungsform ist somit der Stützring am inneren Metallteil fixiert und abgestützt.

Alternativ dazu ist es je nach den Gegebenheiten möglich gemäß Anspruch 4 einen Stützring in einer Ringnut im Aufnahmeauge zu fixieren und abzustützen.

Mit Anspruch 5 wird vorgeschlagen im Bereich beider gegenüberliegender Elastomerkörper-Stirnseiten Stützringe anzubringen. Ggf. kann je nach Einsatz des Lagers auch nur eine einseitige Abstützung mit einem Stützring zweckmäßig sein, insbesondere auch dann, wenn die gegenüberliegende Elastomerkörper-Stirnfläche bereits aufbaubedingt an einer Stützschulter, beispielsweise im Aufnahmeauge, anliegt.

Grundsätzlich können die Stützringmaterial aufnehmenden Ringnuten und die zugeordneten Materialvorsprünge der Stützringe nur abschnittweise ausgebildet sein. Vorteilhaft sind nach Anspruch 6 jedoch die Ringnuten durchgehend umlaufend ausgebildet, ebenso sind die Materialvorsprünge durchgehend als Prägematerialringe angeformt. Damit kann eine große Stützkraft bei hohen Lagerstandzeiten aufgenommen werden. Bei einem insgesamt kreiszylindrischen Gesamtaufbau kann der Stützring bei der Montage in jeder Drehwinkellage aufgesteckt werden. Als Stützringmaterialien werden vorzugsweise Metalle und Metalllegierungen verwendet, wobei jedoch auch verprägbare Kunststoffmaterialien einsetzbar sind.

Nach Anspruch 7 kann die Gestalt des inneren Metallteils und die Innenkontur des Aufnahmeauges prismatisch oder zylindrisch, insbesondere kreiszylindrisch sein. Die erfindungsgemäße Stützringfixierung eignet sich aber grundsätzlich auch für andere Lagergeometrien, beispielsweise für Lager mit balligem inneren Metallteil.

Zur Dimensionierung der axialen Federkennung kann die Lage der Stützringe mitverwendet werden, wobei nach Anspruch 8 ein Stützring bereits von vorneherein unter Vorspannung an einer Elastomerkörper-Stirnfläche anliegen kann, so dass eine relativ große Federkennung von vorneherein vorliegt. Alternativ dazu kann der Stützring im axial unbelasteten Zustand ohne Vorspannung anliegen um eine geringere Federkennung zu erhalten oder der Stützring kann im unbelasteten Zustand einen Abstand zur Elastomerkörper-Stirnseite aufweisen, so dass der Stützring bei axial größeren Auslenkungen als axialer Anschlag mit ansteigender Federkennung wirkt.

In einer bevorzugten Ausführungsform nach Anspruch 9, insbesondere als Lenkerlager für ein Fahrzeugfahrwerk, ist der Elastomerkörper auf dem inneren Metallteil und zwischen dem inneren Metallteil und einem axial geschlitzten Außenblechrohr ggf. mit einem Zwischenblechrohr zur Herstellung eines Gummi-Metallteils einvulkanisiert, wobei das Gummi-Metallteil unter radialer Vorspannung bei geschlossenem Außenblechrohrschlitz im Aufnahmeauge durch axiales Einpressen aufgenommen ist. Ggf. kann die Montage auch über ein Zusammenspannen eines mehrteiligen Aufnahmeauges erfolgen.

Alternativ zu der vorstehenden Ausführungsform, bei der der Elastomerkörper mit dem inneren Metallteil fest verbunden ist, kann auch eine Gummimetallbuchse als separates Bauteil verwendet werden. Gemäß Anspruch 10 besteht eine solche Gummimetallbuchse aus einem Innenrohr und einem axial geschlitzten Außenblechrohr zwischen denen ggf. mit wenigstens einem Zwischenblechrohr Elastomermaterial einvulkanisiert ist. Eine solche Gummimetallbuchse wird dann auf ein ebenfalls separat hergestelltes inneres Metallteil aufgesteckt und beide Bauteile zusammen werden in einem Aufnahmeauge vorgespannt, wobei je nach den Gegebenheiten vorher oder nachher die Stützringe angebracht werden können.

Gemäß Anspruch 11 besteht bei einer solchen Gummimetallbuchse das Innenrohr aus einem kreiszylindrischen Innenblechrohr mit einer radial inneren Gummihautauflage. Nach dem Aufbringen einer radialen Vorspannung im Aufnahmeauge wird insbesondere durch den hohen Reibungskoeffizient der Gummihautauflage eine Lagefixierung der Gummimetallbuchse gegenüber dem inneren Metallteil erreicht, die erst bei einem hohen Losbrechmoment eine Relativbewegung zulässt.

Nach Anspruch 12 ist dagegen das Innenrohr kreiszylindrisch und aus gleitfähigem Material, insbesondere einem Kunststoffmaterial gebildet und auf ein entsprechend kreiszylindrisches inneres Metallteil aufgesteckt. Damit wird auch nach Aufbringen der radialen Vorspannung im Aufnahmeauge schon bei einem geringeren Losbrechmoment eine Relativbewegung, insbesondere eine Verdrehbewegung zwischen der Gummimetallbuchse und dem inneren Metallteil möglich.

Das vorstehende Außenblechrohr kann gemäß Anspruch 13 zusammen mit dem Aufnahmeauge axial über einen Elastomerkörper und die Stützringe vorstehen, so dass es als Anschlag und Radialwegbegrenzung mitverwendet werden kann.

Zusätzlich oder alternativ kann mit den Merkmalen des Anspruchs 14 auch eine axiale Wegbegrenzung über die Stützringe geschaffen werden. Die Stützringe sind dabei am inneren Metallteil durch Verprägen fixiert. Von wenigstens einem der Stützringe stehen nach radial außen Anschläge mit Elastomerauflagen, vorzugsweise als Anschlagscheiben, in den Bereich einer zugeordneten Aufnahmeaugen-Stirnseite ab mit einem dazwischen liegenden Freiraum als zugeordnetem axialen Lagerauslenkweg.

Besonders geeignet ist die erfindungsgemäße Stützringfixierung dann, wenn das innere Lagerteil gemäß Anspruch 15 axial abstehende Anschlusspratzen aufweist, wobei dann der oder die Abstützringe bei der Montage über die Anschlusspratzen aufzustecken sind.

Alternativ zum vorstehenden, einstückig mit dem inneren Metallteil verbundenen Pratzenanschluss wird mit Anschluss 16 ein inneres Metallteil als Metallrohrteil vorgeschlagen. In diesem Metallrohrteil kann dann in an sich bekannter Weise ein an die jeweiligen Anschlussgegebenheiten angepasstes Anschlusselement, beispielsweise ein Zapfenanschluss als einseitiger Konuszapfen oder eine eingesteckte Pratze aufgenommen werden.

Anhand einer Zeichnung wird die Erfindung näher erläutert.

Es zeigen:
- Fig. 1: einen Längsschnitt durch eine erste Ausführungsform eines elastischen Lagers im fertigmontierten Zustand,
- Fig. 2: eine Seitenansicht des Lagers nach Fig. 1,
- Fig. 3: eine vergrößerte Darstellung der Einzelheit B aus Fig. 1,
- Fig. 4: eine Seitenansicht eines Lagerteils gemäß Fig. 1, das noch nicht in ein Aufnahmeauge eingepresst ist,
- Fig. 5: einen Längsschnitt durch das Lagerteil nach Fig. 4,
- Fig. 6: einen Längsschnitt durch einen Stützring in dessen Herstellzustand,
- Fig. 7: eine vergrößerte Darstellung der Einzelheit C aus Fig. 6,
- Fig. 8: einen Längsschnitt durch ein elastisches Lager einer zweiten Ausführungsform im fertigmontierten Zustand,
- Fig. 9: eine Seitenansicht des Lagers nach Fig. 8,
- Fig. 10: eine vergrößerte Darstellung der Einzelheit F aus Fig. 8,
- Fig. 11: einen Längsschnitt durch einen Stützring im Herstellzustand,
- Fig. 12: eine vergrößerte Darstellung der Einzelheit G aus Fig. 11,
- Fig. 13: einen Längsschnitt durch ein elastisches Lager einer zweiten, mehrteiligen Ausführungsform im fertig montierten Zustand,
- Fig. 14: eine Seitenansicht des Lagers nach Fig. 13,
- Fig. 15: eine vergrößerte Darstellung der Einzelheit I aus Fig. 13,
- Fig. 16: eine vergrößerte Darstellung der Einzelheit I aus Fig. 13 für eine modifizierte gleitende Ausführungsform,
- Fig. 17: einen Längsschnitt durch ein elastisches Lager einer vierten Ausführungsform mit einem rohrförmigen inneren Metallteil im montierten Zustand,
- Fig. 18: eine Seitenansicht des Lagers nach Fig. 17,
- Fig. 19: eine Gummimetallbuchse im Herstellzustand, wie sie in den Ausführungsformen von Fig. 13 und Fig. 17 verwendet ist,
- Fig. 20: eine Seitenansicht der Gummimetallbuchse nach Fig. 19,
- Fig. 21: einen Längsschnitt durch ein elastisches Lager einer fünften Ausführungsform mit modifizierten Stützringen im fertig montierten Zustand,
- Fig. 22: eine Seitenansicht des Lagers nach Fig. 21,
- Fig. 23: eine vergrößerte Darstellung der Einzelheit N aus Fig. 21,
- Fig. 24: einen Längsschnitt durch einen Stützring im Herstellzustand der Ausführungsform nach Fig. 21, und
- Fig. 25: eine vergrößerte Darstellung der Einzelheit P aus Fig. 24.

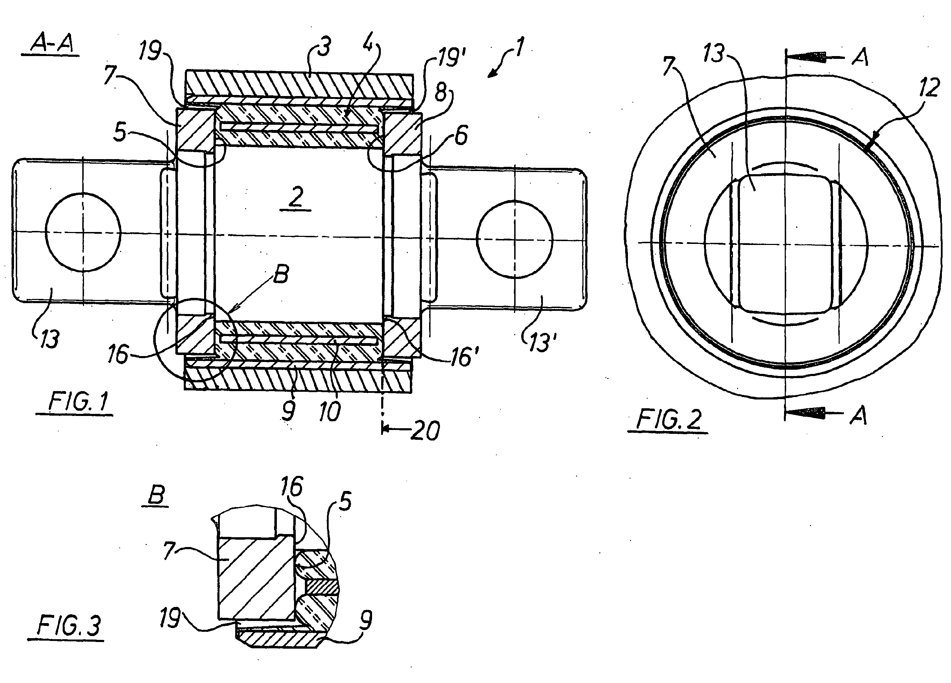

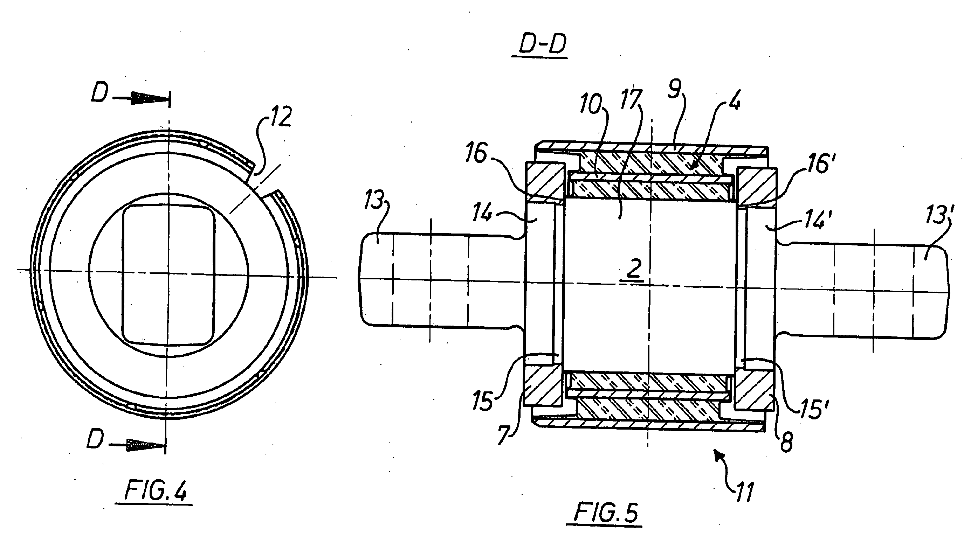

In Fig. 1 ist ein fertigmontiertes elastisches Lager 1 einer ersten Ausführungsform gezeigt, mit einem zylindrischen inneren Metallteil 2, welches in einem rohrförmigen Aufnahmeauge 3 aufgenommen ist. In einem Ringraum zwischen der Außenfläche des inneren Metallteils 2 und der Innenfläche des Aufnahmeauges 3 ist ein ringförmiger vorgespannter Elastomerkörper 4 angeordnet, der beidseitig Elstomerkörper-Stirnflächen 5, 6 aufweist. An beiden Seitenbereichen des Elastomerkörpers 4 sind anliegend an die Elastomerkörper-Stirnflächen 5, 6 Stützringe 7, 8 aufgesteckt und axial fixiert. Anhand der Figuren 4 bis 7 werden der Aufbau des inneren Metallteils 2, des Elastomerkörpers 4 und der Stützringe 7, 8 sowie deren Anbringung näher erläutert:

Nach Fig. 5 ist auf das innere Metallteil 2 ein ringförmiger Elastomerkörper 4 aus Gummi aufvulkanisiert, der an seiner Außenseite ein anvulkanisiertes Außenblechrohr 9 und im inneren Bereich ein Zwischenblechrohr 10 aufweist. Das innere Metallteil 2 und der Elastomerkörper 4 mit seinen Blechrohren 9, 10 bilden ein Gummi-Metallteil 11. Der Außendurchmesser am Außenblechrohr 9 ist im in Fig. 5 dargestellten Herstellzustand größer als der Innendurchmesser des Aufnahmeauges 3. Das Außenblechrohr 9 sowie das Zwischenblechrohr 10 und der Gummikörper weisen im Herstellzustand einen V-förmigen Längsschlitz 12 auf. Das Gummi-Metallteil 11 wird bei der Endmontage (Fig. 1) in das Aufnahmeauge 3 unter Vorspannung eingepresst, wobei sich der Längsschlitz 12 schließt (sh. Fig. 2).

Das dargestellte Lager ist an beiden Seiten gleich und symmetrisch aufgebaut. Am inneren Metallteil 2 ragen zu beiden Seiten Anschlusspratzen 13, 13' ab, an die sich zur Lagermitte hin jeweils zylindrische Aufsteckbereiche 14, 14' sowie Ringnuten 15, 15' anschließen. Die Begrenzung der Ringnuten 15, 15' in Richtung auf die Lagermitte hin wird jeweils durch eine Anlaufschulter 16, 16' gebildet, an die sich der zylindrische Mittenbereich 17 des inneren Metallteils 2 mit dem aufvulkanisierten Elastomerkörper 4 anschließt. Damit hat der Mittenbereich 17 einen größeren Durchmesser als die Aufsteckbereiche 14, 14' gegenüber denen die Ringnuten 15, 15' wiederum einen kleineren Durchmesser aufweisen. Die Anschlusspratzen 13, 13' haben in Querrichtung insgesamt eine geringere Erstreckung als der Durchmesser der Aufsteckbereiche 14, 14', so dass die Stützringe 7, 8 über die Anschlusspratzen 13, 13' auf die Aufsteckbereiche 14, 14' aufsteckbar sind.

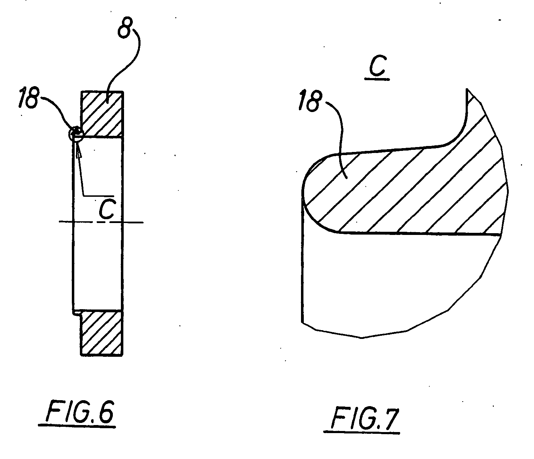

Nach der Herstellung des Gummi-Metallteils 11 werden die Stützringe 7, 8 aufgesteckt und fixiert, wie in Fig. 5 dargestellt. Dazu weisen die Stützringe 7, 8, wie dies anhand des Stützrings 8 in den Figuren 6 und 7 gezeigt, jeweils einen angeformten, am ringinneren Ringwandbereich in Aufsteckrichtung vorspringenden Prägematerialring 18 auf, dessen Materialvolumen dem Aufnahmevolumen (oder geringfügig mehr) der zugeordneten Ringnut 15' entspricht. Das Aufstecken des Stützrings 8 wird mit einer axial gerichteten Aufpressprägekraft durchgeführt, wobei der Prägematerialring 18 an der zugeordneten Anlaufschulter 16' radial in die Ringnut 15' verprägt wird dergestalt, wie in Fig. 5 dargestellt, dass die Ringnut 15' voll mit Stützringmaterial zur axialen Fixierung des Stützrings 8 ausgefüllt ist. In Fig. 3 ist der verprägte Bereich in einer vergrößerten Darstellung am Stützring 7 im Detail gezeigt.

Das Außenblechrohr 11 des Elastomerkörpers 4 steht hier zu beiden Seiten axial vor und übergreift die Stützringe 7, 8. Zudem hat das Aufnahmeauge 3 eine dem Außenblechrohr 9 entsprechende axiale Länge. Wie aus Fig. 1 ersichtlich ist die radiale Erstreckung der Stützringe 7, 8 so dimensioniert, dass zwischen diesen und dem axial überstehenden Außenblechrohr 9 mit dem radial darüberliegenden Aufnahmeauge 9 jeweils ein Ringspalt als Lagerwegspalt 19, 19' für radiale Lagerrelativbewegungen verbleibt. Bei starken radialen Lagerbelastungen legen sich der oder die Stützringe 7, 8 an der Innenseite des Außenblechrohrs 9 an und wirken damit als Anschläge und Radialwegbegrenzungen. Falls eine solche Radialwegbegrenzung nicht zweckmäßig ist, können das Außenblechrohr 9 sowie das Aufnahmeauge 3 in ihrer Länge kürzer dimensioniert werden (beispielsweise bis zur strichlierten Linie 20), so dass sie die Stützringe 7, 8 axial nicht übergreifen.

Die axiale Federkennung kann durch die Lage der Stützringe 7, 8 beeinflusst und den jeweiligen Gegebenheiten angepasst werden: in der Darstellung nach Fig. 1 liegen im eingepressten und vorgespannten Zustand des Gummi-Metallteils 11 die Stützringe 7, 8 bereits unter axialer Vorspannung an den Elastomerkörper-Stirnflächen 5, 6 an, so dass von vorneherein eine relativ hohe axiale Federkennung vorliegt.

In der vergrößerten Darstellung nach Fig. 3 ist bezüglich der axialen Federkennung eine Alternative dargestellt, wobei seitliche Wülste der Elastomerkörper-Stirnfläche 5 den Stützring 7 im vorgespannten, axial unbelasteten Lagerzustand lediglich berühren, so dass die axiale Federkennung bei einer axialen Lagerauslenkung ausgehend von einem kleineren Wert wegen der Abstützwirkung der Stützringe 7, 8 schnell ansteigt.

Eine weitere Dimensionierungsmöglichkeit (die nicht dargestellt ist) besteht darin, im axial unbelasteten Zustand zwischen einem Abstützring 7, 8 und der zugeordneten Elastomerkörper-Stirnfläche 5, 6 einen Abstand vorzusehen, der erst bei größeren axialen Lagerauslenkungen überwunden wird, so dass erst dann die Federkennung durch die Stützwirkung der Stützringe 7, 8 stark zunimmt.

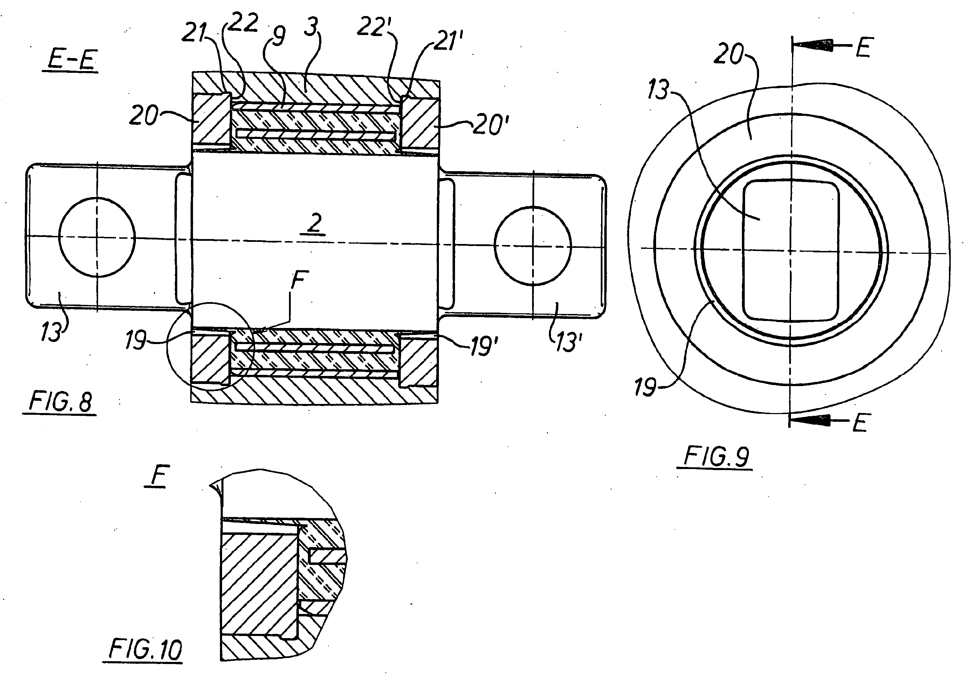

In den Figuren 8 bis 12 ist eine zweite Ausführungsform eines elastischen Lagers dargestellt, welche sich von der vorhergehenden ersten Lagerausführung im wesentlichen nur durch die Anordnung der Fixierung der beidseitigen Stützringe 20, 20' unterscheidet, so dass für gleiche Teile gleiche Bezugszeichen verwendet werden.

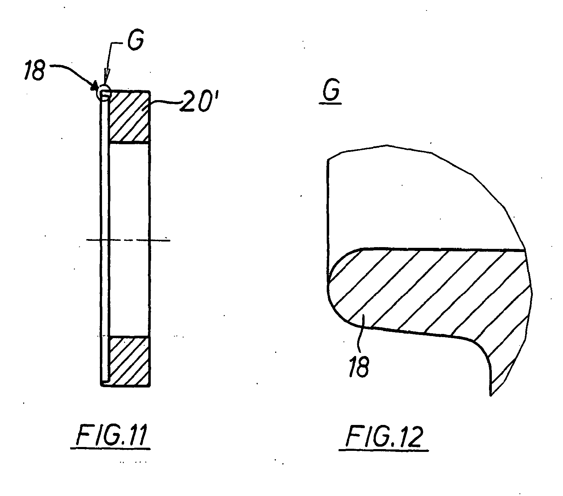

Bei sonst gleichem Lageraufbau übergreift hier das rohrförmige Aufnahmeauge 3 unmittelbar die beiden Stützringe 20, 20', so dass das Außenblechrohr 9 kürzer ist und zwischen den Stützringen 20, 20' liegt. Die Stützringe 20, 20' sind mit ihrer Außenringkontur der Aufnahmeaugeninnenkontur im Abstützbereich angepasst und in das Aufnahmeauge formschlüssig eingesteckt, wobei der radiale Lagerwegspalt 19, 19' jeweils zwischen dem Lagerinnenteil 2 und der Innenringkontur der Stützringe 20, 20' liegt. Ringnuten 21 und 21' sind innen am Aufnahmeauge angebracht und entsprechend liegen die Prägematerialringe 18 an den Stützringen 20, 20' an einem ringäußeren Ringwandbereich, wie in den Fig. 11 und 12 gezeigt. Auch hier schließt sich jeweils an die Ringnuten 21, 21' eine Anlaufschulter 22, 22' für den jeweils im Herstellzustand axial abstehenden Prägematerialring 18 an, der mittels einer Aufpressprägekraft zur Fixierung der Stützringe 20, 20' jeweils in die Ringnuten 21, 21' gepresst und verprägt wird, wie dies in Fig. 10 vergrößert dargestellt ist.

In den nachfolgenden Figuren sind weitere Ausführungsformen eines elastischen Lagers gezeigt, die ähnlich der ersten Ausführungsform sind, so dass entsprechende Bauteile mit gleichen Bezugszeichen versehen sind. Insbesondere sind auch hier Stützringe 7, 8 durch Verprägen in Ringnuten 15, 15' jeweils eines inneren Metallteils 2 axial fixiert.

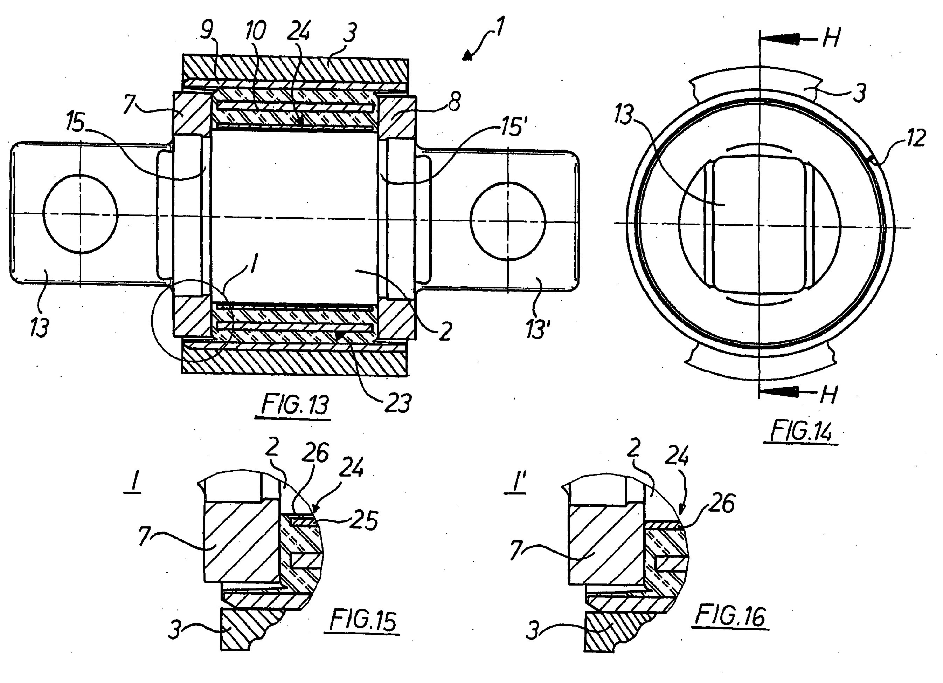

Die dritte Ausführungsform entsprechend den Fig. 13 und 14 unterscheidet sich von der Ausführungsform nach Fig. 1 dadurch, dass das innere Metallteil 2 mit den Anschlusspratzen 13, 13' ein separates Bauteil ist, auf das eine Gummimetallbuchse 23 aufgesteckt ist.

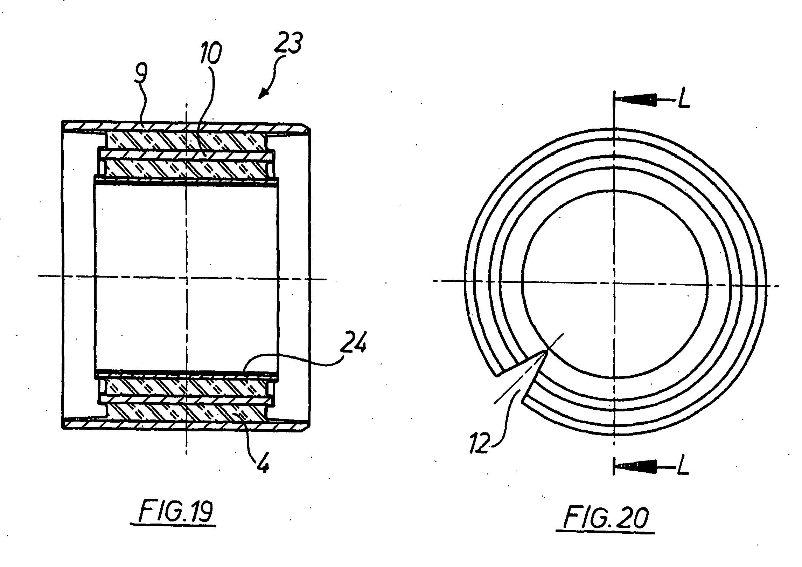

Eine solche Gummimetallbuchse 23 ist in den Fig. 19 und 20 dargestellt und besteht aus einem Außenblechrohr 9 und einem Zwischenblechrohr 10 sowie einem Innenrohr 24. Zwischen dem Innenrohr 24 und dem Außenblechrohr 9 ist ein ringförmiger Elastomerkörper 4 einvulkanisiert. Das Außenblech 9 steht hier jeweils stirnseitig über den Elastomerkörper 4 sowie über das Zwischenblechrohr 10 und das Innenrohr 24 vor. Im Herstellzustand weist das Außenblechrohr 9 sowie das Zwischenblechrohr 10 und der Elastomerkörper 4 einen V-förmigen Längsschlitz 12 auf.

Der Aufbau des Innenrohrs 24 ist aus der vergrößerten Einzelheit I nach Fig. 15 deutlich erkennbar und besteht aus einem Innenblechrohr 25, auf dem eine radial innere Gummihautauflage 26 aufgebracht ist, mit der die Gummimetallbuchse 23 im fertig montierten Zustand unter radialer Vorspannung am mittleren Zylinderbereich des inneren Metallteils 2 fest anliegt.

In einer dagegen modifizierten Ausführungsform entsprechend der vergrößerten Einzelheit I' nach Fig. 16 ist das Innenrohr 24 durch einen Kunststoffrohrabschnitt 26 gebildet, so dass bei einer Drehbelastung des Lagers bereits bei relativ geringen Belastungen eine Relativverdrehung zwischen dem inneren Metallteil 2 und der Gummimetallbuchse 23 möglich ist.

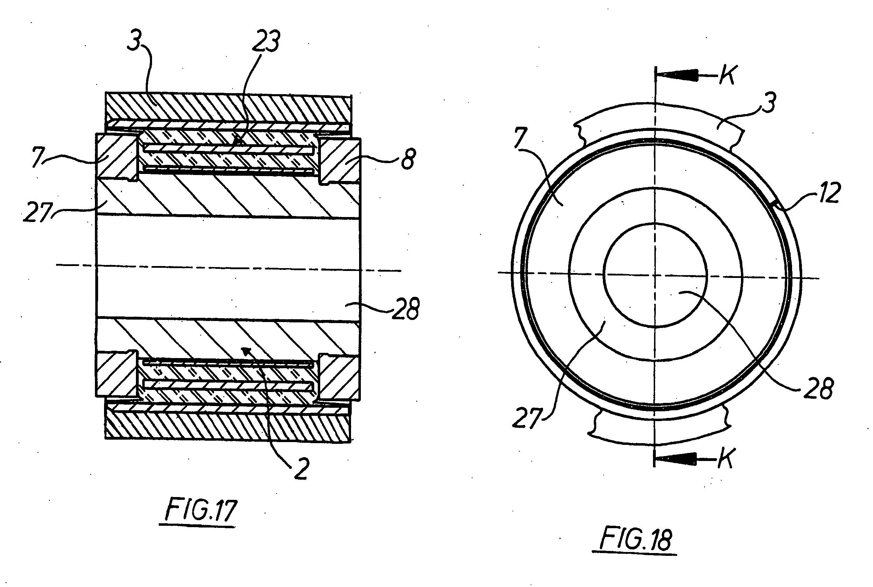

Die weitere vierte Ausführungsform nach den Fig. 17 und 18 entspricht im wesentlichen der dritten Ausführungsform nach den Fig. 13 und 14. Der Unterschied liegt darin, dass bei der vierten Ausführungsform das innere Metallteil mit den Stützringbereichen als Metallrohrteil 27 ausgebildet ist. Auf dieses Metallrohrteil 27 ist auch hier eine Gummimetallbuchse 23 entsprechend der Fig. 19 und 20 aufgesteckt und im Aufnahmeauge 3 unter Vorspannung aufgenommen. Zudem sind auch hier Stützringe 7, 8 aufgesteckt und durch Verprägen fixiert. In der Bohrung 28 des Metallrohrteils 27, die auch konisch ausgeführt sein kann, können in an sich bekannter Weise Anschlusselemente wie beispielsweise Konuszapfen, Verschraubungen, etc. aufgenommen werden. Ähnlich wie in der Ausführungsform von Fig. 1 kann auch hier der Elastomerkörper 4 ohne Innenblechrohr unmittelbar auf das Metallrohrteil aufvulkanisiert sein.

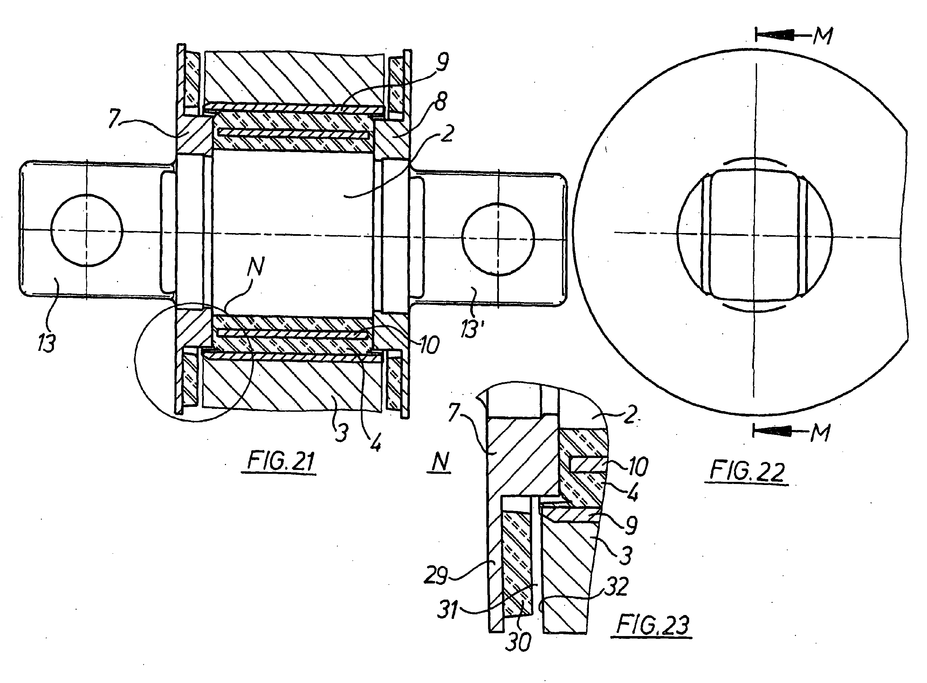

Eine weitere fünfte Ausführungsform entsprechend der Fig. 21 bis 25 entspricht im wesentlichen der ersten Ausführungsform nach den Fig. 1 und 2, wobei bei der fünften Ausführungsform eine Modifikation bei den Stützringen 7, 8 vorgenommen wurde. Ansonsten ist auch hier ein inneres Metallteil 2 mit Pratzen 13, 13' verwendet, auf dem die Stützringe 7, 8 durch Verprägen fixiert sind. Zudem ist in einem Aufnahmeauge 3 ein Elastomerkörper 4 radial verspannt, der einerseits auf dem inneren Metallteil 2 und zwischen einem Außenblechrohr 9 mit einem Zwischenblechrohr 10 einvulkanisiert ist.

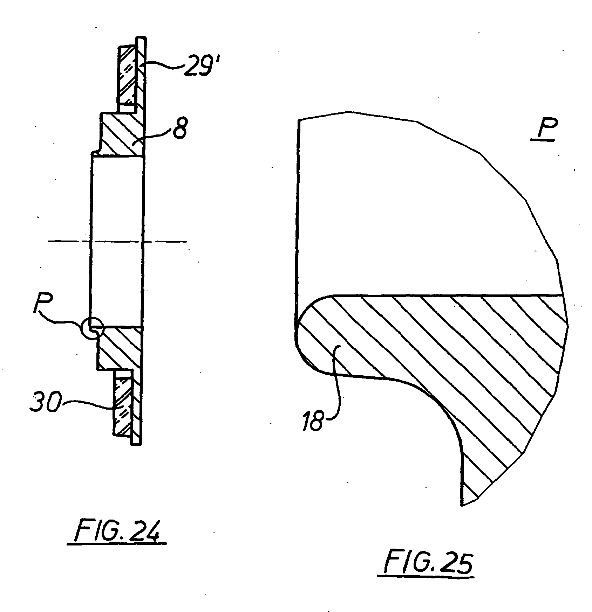

Die weiterbildende Ausgestaltung der Stützringe 7, 8 wird anhand der vergrößerten Einzelheit N in Fig. 23 sowie anhand der Fig. 24 und 25 näher erläutert.

An den Stützringen 7, 8 ist mit kleinerer Dicke jeweils axial außen und radial abstehend eine Anschlagringscheibe 29, 29' angeformt, an deren zur Lagermitte hin weisenden Seite eine Elastomerauflage 30, vorzugsweise als durchgehender Elastomerring angehaftet ist. Die Elastomerauflage 30 liegt mit einem Spalt 31 als axialem Lagerauslenkweg im Bereich gegenüber jeweils einer zugeordneten Aufnahmeaugenstirnseite 32. In Fig. 24 ist ein Längsschnitt durch einen kompletten Stützring 8 im Herstellzustand gezeigt, wobei aus der Einzelheit P nach Fig. 25 erkennbar ist, dass auch hier, ähnlich wie in den vorstehenden Stützringausführungen, ein Prägematerialring 18 vorgesehen ist.

Mit der Ausgestaltung der Stützringe 7, 8 entsprechend der fünften Ausführungsform nach den Fig. 21 bis 25 wird zusätzlich zur axialen Abstützfunktion der Stützringe 7, 8 jeweils ein axialer Anschlag für das Aufnahmeauge 3 geschaffen, der bei axialen Lagerbelastungen mit Verlagerungen größer als die Spaltweite 31 zur Wirkung kommt. Die Abstützwirkung und deren Progressivität kann durch die Weite des Spaltes 31 sowie durch die Materialwahl und geometrische Dimensionierung der Elastomerauflage 30 bestimmt werden.

Die mit einem Axialanschlag modifizierte Ausführung der Stützringe 7, 8 aus der letzten Ausführungsform ist auch verwendbar in Verbindung mit Ausführungsformen entsprechend den Fig. 13 oder 17, bei denen eine Gummimetallbuchse 23 auf ein inneres Metallteil 2 aufgesteckt ist.

## Patentansprüche

1. Elastisches Lager
- mit einem inneren Metallteil (2) als erstem Lagerteil mit wenigstens einem Anschlusselement (13, 13'),
- mit einem äußeren, mit wenigstens einem weiteren Anschlusselement ausgerüsteten, rohrförmigen Aufnahmeauge (3) als zweitem Lagerteil, in dem das erste Lagerteil (2) zumindest teilweise aufgenommen ist,
- mit wenigstens einem unter Vorspannung in einem Spaltraum zwischen der Außenfläche des inneren Metallteils (2) und der Innenfläche des Aufnahmeauges (3) eingebrachten Elastomerkörper (4) mit beidseitigen, quer zur Rohrachse je in einer Querebene des Aufnahmeauges (3) ausgerichteten Elastomerkörper-Stirnflächen (5, 6),
- mit einem in den Bereich wenigstens einer Elastomerkörper-Stirnseite (5, 6) in eine Querebene aufgesteckten und axial abgestützten Stützring (7, 8; 20, 20') für eine Wegbegrenzung der axialen Lagerbewegungen bei anliegender Elastomerkörper-Stirnseite (5, 6),
**dadurch gekennzeichnet,**
**dass** im Bereich des Stützrings (7, 8; 20, 20') in einer Querebene an der Außenfläche des inneren Metallteils (2) oder an der Innenfläche des Aufnahmeauges (3) eine durchgehende oder teilweise unterbrochene Ringnut (15, 15'; 21, 21') eingebracht ist, in die Material (18) des Stützrings (7, 8; 20, 20') für dessen axiale Abstützung verprägt ist.

2. Elastisches Lager nach Anspruch 1, **dadurch gekennzeichnet, dass** in Aufsteckrichtung des Stützrings (7, 8; 20, 20') die zur Lagerlängsmitte hin liegende Ringnutbegrenzung als in den axialen Aufsteckweg des Stützrings (7, 8; 20, 20') ragende Anlaufschulter (16, 16'; 22, 22') ausgebildet ist,
wobei Materialvorsprünge des Stützrings (7, 8; 20, 20'), die im Herstellzustand in dessen Aufsteckrichtung gegen die Anlaufschulter (16, 16'; 22, 22') vorspringen mittels einer axial gerichteten Aufpressprägekraft radial an der Anlaufschulter (16, 16'; 22, 22') in die Ringnut (15, 15'; 21, 21') verprägt werden dergestalt, dass die Materialvorsprünge (18) so dimensioniert sind, dass die zugeordnete Ringnut (15, 15'; 21, 21') wenigstens voll mit Stützringmaterial ausgefüllt ist.

3. Elastisches Lager nach Anspruch 2, **dadurch gekennzeichnet,**
**dass** der Stützring (7, 8) mit seiner Innenringkontur der Metallteilaußenkontur im Abstützbereich angepasst ist und auf das innere Metallteil (2) formschlüssig, ggf. mit einem umlaufenden, ringäußeren Lagerwegspalt (19, 19') zum Aufnahmeauge (3) aufgesteckt ist, und
- **dass** am inneren Metallteil (2) die Ringnut (15, 15') angebracht ist und die Materialvorsprünge (18) am Stützring (7, 8) in dessen Herstellzustand am ringinneren Ringwandbereich in Axialrichtung abstehend angebracht sind, so dass sie auf die Anlaufschulter (16, 16') hin beim Aufpressen abragen.

4. Elastisches Lager nach Anspruch 2, **dadurch gekennzeichnet,**
- **dass** der Stützring (20, 20') mit seiner Außenringkontur der Aufnahmeaugeninnenkontur im Abstützbereich angepasst ist und in das Aufnahmeauge (3) formschlüssig mit einem umlaufenden ringinneren Lagerwegspalt (19, 19') zum inneren Metallteil (2) eingesteckt ist, und
- **dass** am Aufnahmeauge (3) die Ringnut (22, 22') angebracht ist und die Materialvorsprünge (18) am Stützring (20, 20') in dessen Herstellzustand am ringäußeren Ringwandbereich in Axialrichtung abstehend angebracht, so dass sie auf die Anlaufschulter (22, 22') hin beim Aufpressen abragen.

5. Elastisches Lager nach einem der Ansprüche 1 bis 4, **dadurch gekennzeichnet, dass** im Bereich beider gegenüberliegender Elastomerkörper-Stirnflächen (5, 6) Stützringe (7, 8; 20, 20') angebracht sind.

6. Elastisches Lager nach einem der Ansprüche 1 bis 5, **dadurch gekennzeichnet, dass** sowohl die Stützringmaterial aufnehmenden Ringnuten (15, 15'; 21, 21') durchgehend umlaufend ausgebildet sind, als auch die im Herstellzustand der Stützringe (7, 8; 20, 20') angeformten und zugeordneten Materialvorsprünge durchgehend ringförmig als Prägematerialringe (18) ausgebildet sind.

7. Elastisches Lager nach einem der Ansprüche 1 bis 6, **dadurch gekennzeichnet, dass** die Außenkontur des inneren Metallteils (2) und entsprechend die Innenkontur des Aufnahmeauges (3) prismatisch oder zylindrisch sind.

8. Elastisches Lager nach einem der Ansprüche 1 bis 7, **dadurch gekennzeichnet, dass** für eine Dimensionierung der axialen Federkennung der oder die montierten Stützringe (7, 8; 20, 20') so angeordnet sind, dass sie im axial unbelasteten Lagerzustand an den zugeordneten Elastomerkörper-Stirnflächen (5, 6) anliegen oder unter Vorspannung anliegen oder einen Abstand aufweisen.

9. Elastisches Lager nach einem der Ansprüche 1 bis 8, **dadurch gekennzeichnet, dass** Elastomermaterial auf dem inneren Metallteil (2) und zwischen einem axial geschlitzten Außenblechrohr (9) sowie ggf. wenigstens einem ebenfalls axial geschlitzten Zwischenblechrohr (10) zur Herstellung eines Gummi-Metallteils (11) mit einem Elastomerkörper (4) einvulkanisiert ist, und
dass das Gummi-Metallteil (11) unter radialer Vorspannung durch axiales Einpressen in einem einteilig geschlossenen Aufnahmeauge (3) oder durch radiales Zusammenspannen in einem mehrteiligen Aufnahmeauge aufgenommen ist.

10. Elastisches Lager nach einem der Ansprüche 1 bis 8, **dadurch gekennzeichnet, dass** eine Gummimetallbuchse, bestehend aus einem Innenrohr und einem axial geschlitzten Außenblechrohr 9 und dazwischen gegebenenfalls mit wenigstens einem Zwischenblechrohr einvulkanisiertem Elastomermaterial, auf ein inneres Metallteil (2) aufgesteckt ist.

11. Elastisches Lager nach Anspruch 10, **dadurch gekennzeichnet, dass** das Innenrohr ein kreiszylindrisches Innenblechrohr mit einer radial inneren Gummihautauflage ist, das auf ein entsprechend kreiszylindrisches inneres Metallteil aufgesteckt ist.

12. Elastisches Lager nach Anspruch 10, **dadurch gekennzeichnet, dass** das Innenrohr kreiszylindrisch und aus gleitfähigem Material gebildet ist und auf ein entsprechend kreiszylindrisches, inneres Metallteil aufgesteckt ist.

13. Elastisches Lager nach einem der Ansprüche 9 bis 12, **dadurch gekennzeichnet, dass** der oder die Stützringe (7, 8) am inneren Metallteil (2) durch Verprägen fixiert sind, und dass das Außenblechrohr (9) axial über den Elastomerkörper (4) vorsteht und **dadurch** den oder die Stützringe (7, 8) als Radialwegbegrenzung am Lagerwegspalt (19, 19') übergreift.

14. Elastisches Lager nach einem der Ansprüche 1 bis 13, **dadurch gekennzeichnet, dass** die Stützringe (7, 8) am inneren Metallteil (2) durch Verprägen fixiert sind und dass von wenigstens einem der Stützringe (7, 8) nach radial außen Anschläge mit Elastomerauflagen, vorzugsweise als Anschlagringscheibe in den Bereich und um einen axialen Lagerauslenkweg von einer zugeordneten Aufnahmeaugenstirnseite beabstandet abstehen.

15. Elastisches Lager nach einem der Ansprüche 1 bis 14, **dadurch gekennzeichnet, dass** als Anschlusselement des inneren Metallteils (2) eine oder zwei gegenüberliegende, axial abstehende Anschlusspratzen (13, 13') vorgesehen sind, vorzugsweise materialeinheitlich angeformt sind.

16. Elastisches Lager nach einem der Ansprüche 1 bis 14, **dadurch gekennzeichnet, dass** das innere Metallteil mit den Stützringbereichen als Metallrohrteil ausgebildet ist, wobei im Metallrohrteil wenigstens ein Anschlusselement aufgenommen werden kann.

## Claims

1. Elastic bearing
- having an inner metal part (2) as first bearing part with at least one connecting element (13, 13'),
- having an outer tubular receiving eye (3) as second bearing part which is equipped with at least one further connecting element and in which the first bearing part (2) is received at least partially,
- having at least one elastomer element (4) which is introduced under prestress into a gap space between the outer face of the inner metal part (2) and the inner face of the receiving eye (3), with elastomer-element end faces (5, 6) on both sides which are oriented transversely with respect to the tube axis in each case in a transverse plane of the receiving eye (3),
- having a supporting ring (7, 8; 20, 20') which is supported axially and is plugged into the region of at least one elastomer-element end side (5, 6) in a transverse plane for limiting the travel of the axial bearing movements when an elastomer-element end side (5, 6) is in contact,
**characterized in that** a continuous or partially interrupted annular groove (15, 15'; 21, 21') is made in the region of the supporting ring (7, 8; 20, 20') in a transverse plane on the outer face of the inner metal part (2) or on the inner face of the receiving eye (3), into which annular groove (15, 15'; 21, 21') material (18) of the supporting ring (7, 8; 20, 20') is pressed for its axial support.

2. Elastic bearing according to Claim 1, **characterized in that,** in the plug-on direction of the supporting ring (7, 8; 20, 20'), the annular groove delimitation which lies towards the bearing longitudinal centre is configured as a run-on shoulder (16, 16'; 22, 22') which protrudes into the axial plug-on path of the supporting ring (7, 8; 20, 20'), material projections of the supporting ring (7, 8; 20, 20') which protrude in the produced state in its plug-on direction counter to the run-on shoulders (16, 16'; 22, 22') are pressed radially on the run-on shoulder (16, 16'; 22, 22') into the annular groove (15, 15'; 21, 21') by means of an axially directed pressing-on force in such a way that the material projections (18) are dimensioned such that the associated annular groove (15, 15'; 21, 21') is filled at least completely with supporting-ring material.

3. Elastic bearing according to Claim 2, **characterized in that** the supporting ring (7, 8) is adapted with its inner ring contour to the metal-part outer contour in the supporting region and is plugged positively onto the inner metal part (2), optionally with a circumferential, bearing travel gap (19, 19') on the outside of the ring with respect to the receiving eye (3), and **in that** the annular groove (15, 15') is made on the inner metal part (2) and the material projections (18) are made so as to project in the axial direction on the supporting ring (7, 8) in its produced state on the annular wall region on the inside of the ring, with the result that they project towards the run-on shoulders (16, 16') during pressing on.

4. Elastic bearing according to Claim 2, **characterized in that** the supporting ring (20, 20') is adapted with its outer ring contour to the receiving-eye inner contour in the supporting region and is plugged positively into the receiving eye (3) with a circumferential bearing travel gap (19, 19') on the inside of the ring with respect to the inner metal part (2), and **in that** the annular groove (22, 22') is made on the receiving eye (3) and the material projections (18) are made so as to project in the axial direction on the supporting ring (20, 20') in its produced state on the annular wall region on the outside of the ring, with the result that they project towards the run-on shoulders (22, 22') during pressing on.

5. Elastic bearing according to one of Claims 1 to 4, **characterized in that** supporting rings (7, 8; 20, 20') are attached in the region of both elastomer-element end faces (5, 6) which lie opposite one another.

6. Elastic bearing according to one of Claims 1 to 5, **characterized in that** both the annular grooves (15, 15'; 21, 21') which receive supporting-ring material are of continuously circumferential configuration and the material projections which are formed and assigned in the produced state of the supporting rings (7, 8; 20, 20') are of continuously annular configuration as pressing-material rings (18).

7. Elastic bearing according to one of Claims 1 to 6, **characterized in that** the outer contour of the inner metal part (2) and correspondingly the inner contour of the receiving eye (3) are prismatic or cylindrical.

8. Elastic bearing according to one of Claims 1 to 7, **characterized in that,** for dimensioning the axial spring characteristic, the mounted supporting ring or supporting rings (7, 8; 20, 20') is/are arranged in such a way that it/they bears/bear against the associated elastomer-element end faces (5, 6) in the axially unloaded bearing state or bears/bear against them under prestress or has/have a spacing.

9. Elastic bearing according to one of Claims 1 to 8, **characterized in that** elastomer material is vulcanized in on the inner metal part (2) and between an axially slotted outer sheet-metal tube (9) and optionally at least one likewise axially slotted intermediate sheet-metal tube (10) in order to produce a rubber/metal part (11) having an elastomer element (4), and **in that** the rubber/metal part (11) is received under radial prestress by being axially pressed into an integrally closed receiving eye (3) or by being clamped radially together in a multiple-part receiving eye.

10. Elastic bearing according to one of Claims 1 to 8, **characterized in that** a rubber/metal bush, comprising an inner tube and an axially slotted outer sheet-metal tube (9) and, between them, optionally elastomer material which is vulcanized in with at least one intermediate sheet-metal tube, is plugged onto an inner metal part (2).

11. Elastic bearing according to Claim 10, **characterized in that** the inner tube is a circularly cylindrical inner sheet-metal tube which has a radially inner rubber skin layer and is plugged onto a correspondingly circularly cylindrical inner metal part.

12. Elastic bearing according to Claim 10, **characterized in that** the inner tube is formed in a circularly cylindrical manner and from slidable material and is plugged onto a correspondingly circularly cylindrical, inner metal part.

13. Elastic bearing according to one of Claims 9 to 12, **characterized in that** the supporting ring or rings (7, 8) is/are fixed by pressing on the inner metal part (2), and **in that** the outer sheet-metal tube (9) protrudes axially beyond the elastomer element (4) and as a result reaches over the supporting ring or rings (7, 8) as radial travel limitation at the bearing travel gap (19, 19').

14. Elastic bearing according to one of Claims 1 to 13, **characterized in that** the supporting rings (7, 8) are fixed by pressing on the inner metal part (2), and **in that** stops having elastomer coatings project from at least one of the supporting rings (7, 8) radially to the outside, preferably as a stop ring disc into the region and spaced apart from an associated receiving-eye end side by an axial bearing deflection travel.

15. Elastic bearing according to one of Claims 1 to 14, **characterized in that,** as connecting element of the inner metal part (2), one or two axially protruding connecting claws (13, 13') which lie opposite one another are provided, preferably are formed integrally from the same material.

16. Elastic bearing according to one of Claims 1 to 14, **characterized in that** the inner metal part is formed with the supporting-ring regions as metal-tube part, it being possible for at least one connecting element to be received in the metal-tube part.

## Revendications

1. Support élastique comprenant :
- une pièce métallique intérieure (2) faisant office de première pièce de support dotée d'au moins un élément de raccordement (13, 13'),
- un oeillet de réception (3) tubulaire extérieur équipé d'au moins un autre élément de raccordement, faisant office de seconde pièce de support, dans laquelle la première pièce de support (2) est reçue au moins en partie,
- au moins un corps en élastomère (4) introduit par précontrainte dans un interstice entre la surface extérieure de la pièce métallique intérieure (2) et la surface intérieure de l'oeillet de réception (3), doté de surfaces frontales de corps en élastomère (5, 6) sur les deux côtés, orientées transversalement à l'axe de tube respectivement dans un plan transversal de l'oeillet de réception (3),
- une bague d'appui (7, 8 ; 20, 20') montée dans la zone d'au moins une face frontale de corps en élastomère (5, 6) dans un plan transversal et appuyée dans le sens axial pour une limitation de course des déplacements axiaux du support lorsque la face frontale de corps en élastomère (5, 6) est accolée,
**caractérisé en ce que**
dans la zone de la bague d'appui (7, 8 ; 20, 20') dans un plan transversal sur la surface extérieure de la pièce métallique intérieure (2) ou sur la surface intérieure de l'oeillet de réception (3) est introduite une rainure annulaire continue ou en partie interrompue (15, 15' ; 21, 21'), dans laquelle le matériau (18) de la bague d'appui (7, 8 ; 20, 20') pour l'appui axial de celle-ci est estampé.

2. Support élastique selon la revendication 1, **caractérisé en ce que** dans la direction de montage de la bague d'appui (7, 8 ; 20, 20'), la limitation de rainure annulaire située en direction du centre longitudinal du support est conçue comme des épaulements d'arrêt (16, 16' ; 22, 22') dépassant dans la course axiale de montage de la bague d'appui (7, 8 ; 20, 20'),
grâce à quoi des saillies de matériau de la bague d'appui (7, 8 ; 20, 20'), qui font saillie à l'état de fabrication dans la direction de montage de celle-ci contre les épaulements d'arrêt (16, 16' ; 22, 22'), sont estampées radialement, au moyen d'une force d'estampage d'engagement par pression orientée axialement, sur les épaulements d'arrêt (16, 16' ; 22, 22') dans la rainure annulaire (15, 15' ; 21, 21') de telle sorte que les saillies de matériau (18) sont dimensionnées de sorte que la rainure annulaire associée (15, 15' ; 21, 21') est remplie au moins entièrement de matériau de bague d'appui.

3. Support élastique selon la revendication 2, **caractérisé en ce que**
la bague d'appui (7, 8) avec son contour de bague intérieure est adaptée au contour extérieur de la pièce métallique dans la zone d'appui et est montée sur la pièce métallique intérieure (2) par coopération de formes, éventuellement avec un jeu de course de support circulaire (19, 19') à l'extérieur de la bague par rapport à l'oeillet de réception (3), et
- **en ce que** la rainure annulaire (15, 15') est aménagée sur la pièce métallique intérieure (2) et les saillies de matériau (18) sur la bague d'appui (7, 8) dans l'état de fabrication de celle-ci sont aménagées sur la zone de paroi de bague à l'intérieur de la bague en dépassant dans la direction axiale, de sorte qu'elles font saillie vers les épaulements d'arrêt (16, 16') lors d'un engagement par pression.

4. Support élastique selon la revendication 2, **caractérisé en ce que**
- la bague d'appui (20, 20') avec son contour extérieur de bague est adaptée au contour intérieur de l'oeillet de réception dans la zone d'appui et est insérée dans l'oeillet de réception (3) par coopération de formes avec un jeu de course de support (19, 19') circulaire à l'intérieur de la bague par rapport à la pièce métallique intérieure (2), et
- **en ce que** la rainure annulaire (22, 22') est aménagée sur l'oeillet de réception (3) et les saillies de matériau (18) sur la bague d'appui (20, 20') dans l'état de fabrication de celle-ci sont aménagées sur la zone de paroi de bague à l'extérieur de la bague en dépassant dans la direction axiale, de sorte qu'elles dépassent en direction des épaulements d'arrêt (22, 22') lors d'un engagement par pression.

5. Support élastique selon l'une quelconque des revendications 1 à 4, **caractérisé en ce que** les bagues d'appui (7, 8 ; 20, 20') sont aménagées dans la zone des deux surface frontales opposées du corps en élastomère (5, 6).

6. Support élastique selon l'une quelconque des revendications 1 à 5, **caractérisé en ce que** les rainures annulaires (15, 15' ; 21, 21') recevant le matériau de bague d'appui sont conçues de manière continue et circulaire, et les saillies de matériau intégrées et associées dans l'état de fabrication des bagues d'appui (7, 8 ; 20, 20') sont conçues de manière continue et annulaire comme des bagues de matériau estampé (18).

7. Support élastique selon l'une quelconque des revendications 1 à 6, **caractérisé en ce que** le contour extérieur de la pièce métallique intérieure (2) et de manière correspondante le contour intérieur de l'oeillet de réception (3) sont prismatiques ou cylindriques.

8. Support élastique selon l'une quelconque des revendications 1 à 7, **caractérisé en ce que**, pour un dimensionnement de la caractéristique élastique, la ou les bagues d'appui (7, 8 ; 20, 20') montées sont disposées de sorte que, dans l'état où le support n'est pas chargé axialement, elles sont accolées aux surfaces frontales du corps en élastomère (5, 6) associées ou se situent sous l'effet d'une précontrainte ou présentent un écart.

9. Support élastique selon l'une quelconque des revendications 1 à 8, **caractérisé en ce que** le matériau en élastomère sur la pièce métallique intérieure (2) et entre un tube de tôle extérieur (9) fendu axialement ainsi qu'éventuellement au moins un tube de tôle intermédiaire (10) également fendu axialement est vulcanisé pour fabriquer une pièce métallique caoutchoutée (11) avec un corps en élastomère (4), et
**en ce que** la pièce métallique caoutchoutée (11) sous l'effet d'une précontrainte radiale est reçue par un enfoncement à force axial dans un oeillet de réception (3) fermé en une seule partie ou par un serrage conjoint radial dans un oeillet de réception en plusieurs parties.

10. Support élastique selon l'une quelconque des revendications 1 à 8, **caractérisé en ce qu'**une douille métallique caoutchoutée, constituée d'un tube intérieur et d'un tube de tôle extérieur (9) fendu axialement et, entre les deux éventuellement, d'au moins un matériau élastomère vulcanisé avec au moins un tube de tôle intermédiaire est introduite sur une partie métallique intérieure (2).

11. Support élastique selon la revendication 10, **caractérisé en ce que** le tube intérieur est un tube en tôle intérieur de type cylindrique circulaire comprenant une surface d'enveloppe caoutchoutée intérieure radiale qui est montée sur une pièce métallique intérieure de type cylindrique circulaire de manière correspondante.

12. Support élastique selon la revendication 10, **caractérisé en ce que** le tube intérieur est du type cylindrique circulaire et est formé à partir d'un matériau glissant et est monté sur une pièce métallique intérieure de type cylindrique circulaire de manière correspondante.

13. Support élastique selon l'une quelconque des revendications 9 à 12, **caractérisé en ce que** la ou les bagues d'appui (7, 8) sont fixées sur la pièce métallique intérieure (2) par estampage, et **en ce que** le tube de tôle extérieur (9) dépasse axialement du corps élastomère (4) et fait ainsi saillie de la ou des bagues d'appui (7, 8) en tant que limitation de course radiale sur le jeu de course de support (19, 19').

14. Support élastique selon l'une quelconque des revendications 1 à 13, **caractérisé en ce que** les bagues d'appui (7, 8) sont fixées sur la pièce métallique intérieure (2) par estampage et **en ce qu'**au moins d'une des bagues d'appui (7, 8) dépassent radialement vers l'extérieur des butées dotées de surfaces d'appui en élastomère, faisant de préférence office de disque annulaire de butée dans la zone et suivant une course axiale de déviation de support en étant distantes d'une face frontale d'oeillet de réception associée.

15. Support élastique selon l'une quelconque des revendications 1 à 14, **caractérisé en ce qu'**une ou deux griffes de raccordement (13, 13') opposées dépassant axialement sont prévues comme élément de raccordement de la partie métallique intérieure (2), formées de préférence de manière homogène en matériau.

16. Support élastique selon l'une quelconque des revendications 1 à 14, **caractérisé en ce que** la pièce métallique intérieure comprenant les zones de bague d'appui est conçue comme une pièce tubulaire métallique, au moins un élément de raccordement pouvant être reçu dans la pièce tubulaire métallique.
